# FASCICULE DE BREVET EUROPEEN

(11) **EP 0 494 812 B1**
(45) Date de publication et mention de la délivrance du brevet: **23.03.1994**
(21) Numéro de dépôt: 92400022.7
(22) Date de dépôt: 06.01.1992
(51) Int. Cl.: A01K 5/00, A01F 29/00

(54) **Perfectionnement aux bennes mélangeuses et distributrices de produits destinés à l'élevage**
Behälter zum Mischen und Verteilen von Produkten für die Aufzucht von Tieren
Container for mixing and distributing products for raising animals

(30) Priorité: 11.01.1991 FR 9100388
(43) Date de publication de la demande: 15.07.1992
(73) Titulaire: LUCAS G. S.A., F-85130 La Verrie (FR)
(72) Inventeur: Lucas, Gérard, F-85130 La Verrie (FR)
(74) Mandataire: Phélip, Bruno

(56) Documents cités:
- FR-A- 2 335 370
- FR-A- 2 376 621
- FR-A- 2 528 773
- FR-A- 2 633 148
- US-A- 2 650 745
- US-A- 4 124 166

## Description

La présente invention concerne un perfectionnement aux bennes mélangeuses et distributrices de produits destinés à l'élevage.

Dans les installations d'élevage du bétail, il est connu de distribuer les aliments et en particulier le fourrage avec des additifs ou compléments, du genre farine ou autre ; ces aliments sont distribués au moyen d'une benne, depuis un couloir aménagé soit au centre soit en bordure des stalles. La benne de distribution doit donc être équipée de moyens qui permettent de distribuer les aliments soit sur la droite, soit sur la gauche.

En général, ce type de benne comporte également des moyens qui permettent un retour des produits dans la trémie. On peut ainsi effectuer un mélange des produits, c'est-à-dire un brassage du fourrage et de ses additions ou compléments, avant leur distribution.

Une benne de ce type est notamment décrite dans les documents FR-A-2 335 370 et US-A-4 124 166. Elle comporte, dans la partie inférieure de la trémie, des moyens qui permettent de faire progresser les produits vers l'avant et en particulier vers un rotor d'éjection centrifuge, lequel rotor est centré sur l'axe longitudinal de la benne. Ce rotor s'apparente à un grand ventilateur et il tourne dans une volute qui forme un carter à l'avant de la benne ; il comporte des pales radiales qui projettent le produit à l'extérieur de la volute par une sortie tangentielle.
Pour permettre une distribution des deux côtés de la benne ainsi qu'un recyclage du produit, la volute est montée pivotante autour de l'axe du rotor d'éjection de façon à positionner sa sortie en face de déflecteurs situés respectivement de chaque côté de la benne pour la distribution latérale à droite ou à gauche, et à la partie supérieure pour le recyclage et le mélange des produits avant leur distribution.

La position des déflecteurs, fixés sur la benne, n'offre pas une grande souplesse d'utilisation, ni une grande précision pour diriger le jet de produits éjectés.

Le document FR-A-2 528 773 concerne également une benne mélangeuse distributrice constituée d'une volute cylindrique associée à un rotor d'éjection. Dans ce dispositif particulier, la volute fixe est associée à une goulotte d'éjection orientable par pivotement autour d'un axe vertical.

La goulotte utilisée a une section de raccordement circulaire avec la volute.

Ce type de raccordement entre volute et goulotte, requiert des travaux de chaudronnerie complexes et coûteux du fait de l'évolution des sections ; ces sections évoluent en effet du polygone carré ou rectangulaire vers le cercle pour revenir à un polygone carré le plus souvent.

La présente invention propose un perfectionnement à ces bennes mélangeuses et distributrices et notamment un perfectionnement au couple constitué par la volute et la goulotte d'éjection des produits, de façon à distribuer plus rationnellement lesdits produits selon leur nature et leur destination, et de façon aussi à mieux gérer la puissance dissipée dans le rotor d'éjection.

En effet, une benne de ce type, doit pouvoir réaliser des opérations dites de paillage qui consistent à distribuer sur toute la surface des stalles une quantité relativement importante de paille pour faire une litière. Cette opération nécessite une puissance d'éjection relativement importante pour projeter la paille sur toute la profondeur des stalles.

Avec ce type de benne, on réalise également le remplissage des auges. Ce remplissage s'effectue juste en bordure de la benne. Il n'est pas nécessaire d'utiliser toute la puissance du rotor d'éjection, pour cette opération.

Enfin, le rotor propulse les produits pour effectuer des opérations de mélange par recyclage desdits produits dans la benne. Là encore la puissance requise pour cette opération de mélange est maintenue à une valeur modeste.

L'invention propose un ensemble volute-goulotte, mieux adapté aux bennes à multiples fonctions et elle propose en particulier une amélioration du rendement au niveau de l'éjection, laquelle amélioration se traduit par un gain de puissance importante sur le rotor d'éjection.

L'invention permet également, par cet ensemble volute-goulotte, d'améliorer la régularité du jet de produits ainsi que la précision de son positionnement.

La présente invention propose un perfectionnement au niveau de l'ensemble goulotte-volute qui permet également de conserver un espace relativement réduit entre le rotor et la paroi avant de la benne de façon à éviter les phénomènes de stagnation et de bourrage dus à l'agglomération des produits dans les zones non balayées par ledit rotor.

Par ailleurs, l'invention propose l'adoption d'une goulotte ou déflecteur, d'une conception plus simple et munie de moyens qui permettent de faire varier les angles du jet des produits éjectés, dans une gamme très étendue.

La benne selon l'invention comprend un rotor d'éjection disposé à l'avant de la benne, tournant sur un axe généralement longitudinal, dans une volute montée elle-même pivotante autour de cet axe ; cette volute comporte : une goulotte d'éjection des produits, disposée tangentiellement, et des moyens pour faire varier l'orientation de cette goulotte de façon à réaliser le paillage ou une distribution du produit à l'extérieur de la benne à droite ou à gauche et réaliser un recyclage du produit à l'intérieur de la benne, dans sa trémie.

Selon une disposition préférentielle de l'invention, la goulotte d'éjection est solidaire de la volute au moyen d'une couronne d'orientation constituée d'un arc circulaire solidaire de la sortie de ladite volute, devant la paroi avant de la benne et permet le guidage des quatre coins d'un cadre servant d'embase support à ladite goulotte, lequel cadre peut, dans certaines positions de la volute, soit être mis en mouvement, guidé par ladite couronne, soit être adossé à ladite paroi avant de la benne sans possibilité de tourner.

Toujours selon l'invention, la sortie tangentielle de la volute et l'entrée de la goulotte au niveau de la couronne d'orientation ont une même section de forme carrée dont la dimension du côté est sensiblement supérieure à la dimension des pales du rotor. Cette section carrée permet un gain de l'ordre de 30 % par rapport à une section circulaire dont le diamètre correspond à la largeur du carré.

Selon une autre disposition de l'invention, la goulotte comporte des moyens d'orientation qui sont constitués d'une chaîne disposée dans un plan parallèle à celui de la couronne circulaire, tendue entre deux points situés au niveau de la face de la goulotte qui est positionnée du côté de l'éjection des produits, et, d'autre part, d'un organe moteur interposé entre ladite chaîne et ladite goulotte. La chaîne d'entraînement est soumise à des moyens qui absorbent, de façon élastique, ses variations de tension.

Selon une autre disposition de l'invention, la goulotte est constituée d'un déflecteur monolithique comprenant une bande dorsale et des flancs en forme d'écailles. Ce déflecteur est par ailleurs soumis à des moyens de déformation qui procurent une variation de la courbure de l'arc formé par la bande dorsale. Ces moyens sont constitués d'un vérin interposé entre l'embase de la goulotte et un étrier guidé dans un bâti solidaire de ladite embase et articulé, à son extrémité, sur la partie aval du déflecteur.

L'invention sera encore détaillée à l'aide de la description suivante et des dessins annexés, donnés à titre indicatif et dans lesquels :
- la figure 1 est une vue de côté d'une benne mélangeuse distributrice selon l'invention ;
- la figure 2 est une vue de dessus de cette même benne ;
- la figure 3 est une vue de face de cette benne ;
- la figure 4 illutre les différentes positions prises par la goulotte d'éjection pour réaliser des opérations de distribution de produits et des opérations de paillage ;
- la figure 5 représente, de façon partielle et détaillée, une coupe de la volute selon 5-5 ;
- la figure 6 représente, de façon partielle, en vue de face, la volute et ses moyens de guidage sur la face avant de la benne ;
- la figure 7 est une vue schématique de dessus du dispositif d'orientation de la goulotte ;
- la figure 8 est une vue en coupe selon 8-8 du dispositif d'orientation de la goulotte ;
- la figure 9 est une coupe selon 9-9 montrant la sortie de la volute et la goulotte ;
- la figure 10 illustre, de façon schématique, la position de l'embase de la goulotte au cours de son pivotement, par rapport à la face avant de la benne.

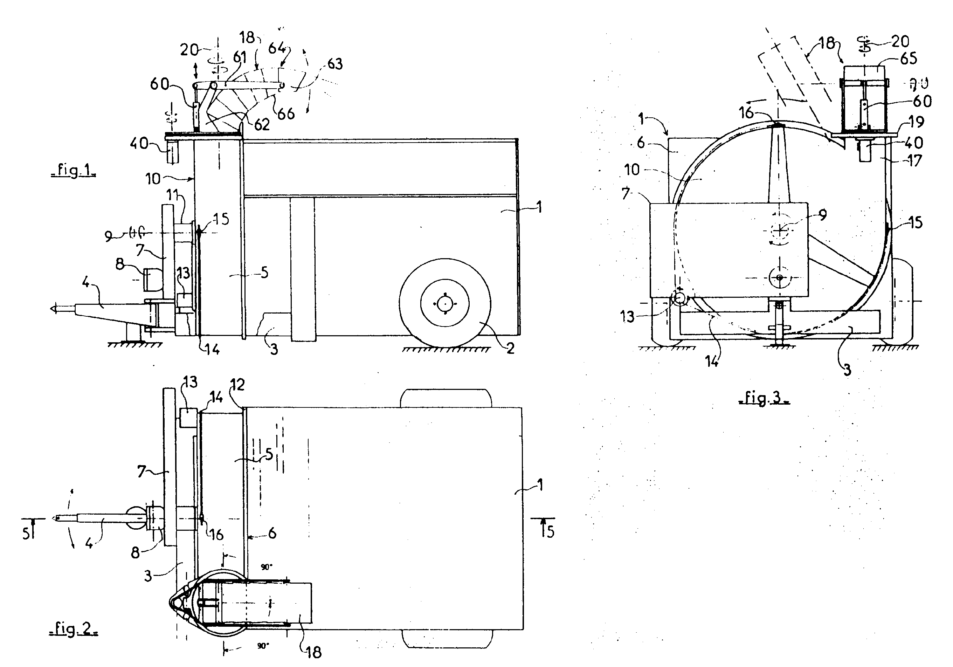

Telle que représentée figures 1, 2 et 3, la benne est essentiellement constituée d'une trémie 1 portée par des roues 2 et reliée par un châssis 3, à un timon 4 connecté à la barre d'attelage d'un tracteur non représenté.

Le châssis 3, à l'avant de la benne, se présente sous la forme d'un U qui encadre la partie inférieure de la volute 5. Cette volute 5 est interposée entre la face avant 6 de la trémie 1 et le boîtier 7 qui reçoit la puissance du tracteur par un accouplement 8 du type à cardan ; ce boîtier distribue cette puissance aux différents organes de la benne ; il est solidaire de la branche transversale du châssis 3.

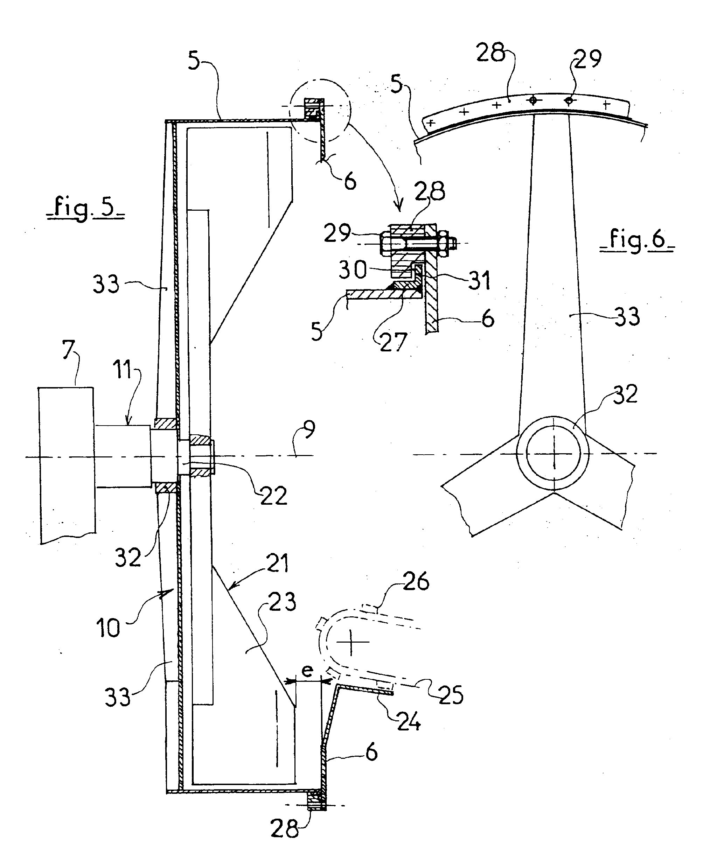

La volute 5 comporte une paroi cylindrique centrée sur l'axe longitudinal horizontal 9. Cette volute 5 est délimitée par la paroi 6 située à l'avant de la trémie et par une paroi d'extrémité frontale, en forme de disque 10, qui est guidée en rotation sur le moyeu 11 servant de guidage de l'arbre du rotor d'éjection montré plus loin. Le moyeu 11 est solidaire du boîtier 7. La bordure de la paroi cylindrique de la volute 5 est guidée dans une grande couronne circulaire 12 aménagée sur la face avant 6 de la trémie 1. Ces différents moyens de guidage de la volute 5 sont détaillés figures 5 et 6.

Le pivotement de la volute autour de l'axe longitudinal 9 s'effectue au moyen d'un organe moteur 13 solidaire du châssis 3, disposé latéralement, à l'extérieur et vers le bas de la volute 5. Cet organe moteur 13, du type moteur hydraulique, entraîne une chaîne 14 enroulée sur la paroi cylindrique de la volute 5, entre deux points 15 et 16 disposés de part et d'autre de sa sortie tangentielle 17. Le moteur 13 entraîne la chaîne 14 et provoque le pivotement de la volute 5 autour de l'axe longitudinal 9 ce qui a pour effet de déplacer à volonté la sortie 17 pour éjecter selon les besoins : à droite ou à gauche de la benne, ou encore dans la trémie 1.

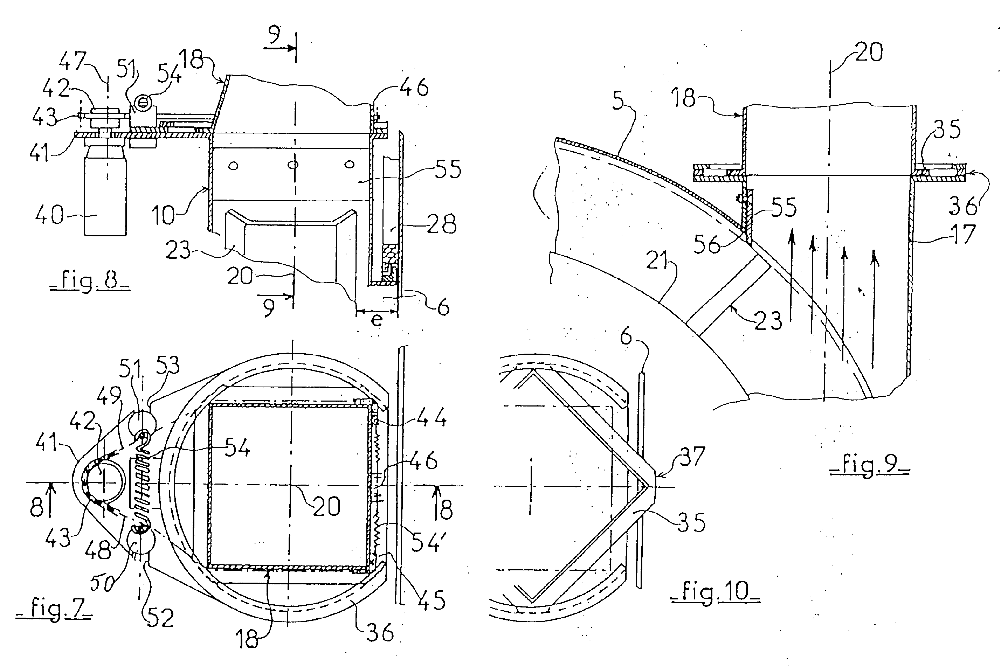

L'éjection des produits s'effectue au moyen d'une goulotte 18 associée à la sortie tangentielle 17. Cette goulotte 18 est solidaire de la sortie 17 au moyen d'un dispositif d'orientation 19 détaillé figures 7 à 10. Ce dispositif d'orientation permet de distribuer les produits éjectés, au moyen de la goulotte 18, soit à l'extérieur de la benne, soit dans la trémie, pour effectuer une opération de recyclage et mélange des produits.

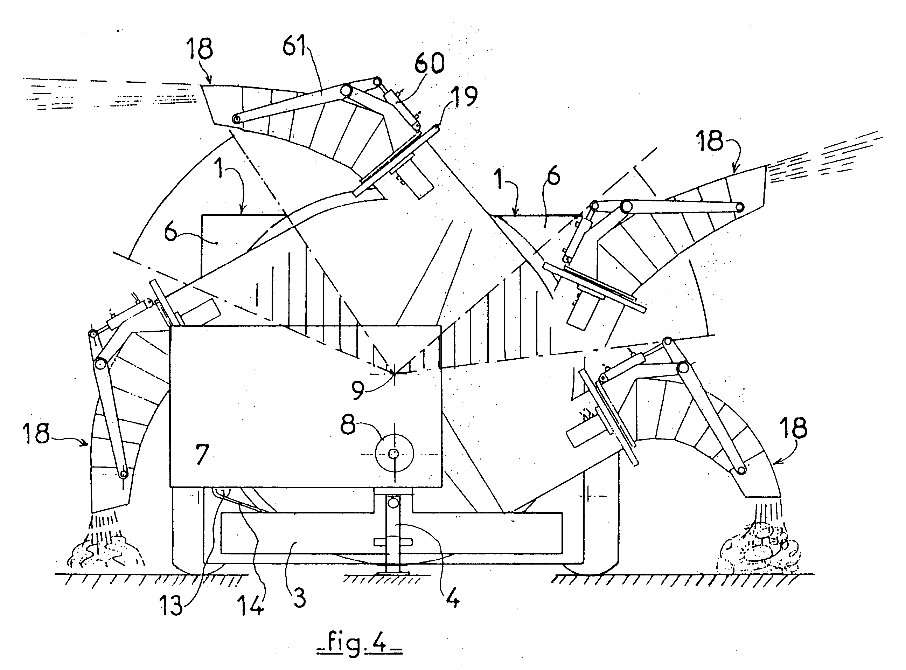

On a notamment représenté, figure 3, en traits mixtes fins, la position de la goulotte 18, légèrement inlinée pour l'opération de recyclage et mélange.

La figure 4 illustre quelques unes des différentes positions qui peuvent être prises par la volute 5 et la goulotte 18 pour réaliser les opérations de distribution d'aliments et de paillage, à droite ou à gauche de la benne.

On a également représenté, sur cette figure 4, qui est une vue de face de la benne, des zones hachurées qui correspondent à des positions de la sortie 17 de la volute 5 dans lesquelles la goulotte 18 ne peut faire l'objet d'un mouvement d'orientation autour de son axe 20, lequel axe 20 correspond à la direction d'éjection des produits au niveau de la sortie 17 de la volute 5, c'est-à-dire l'axe tangentiel de cette sortie 17.

On a représenté figures 5 et 6, d'une façon plus détaillée, les moyens de guidage de la volute 5. Cette volute 5 comporte une enveloppe de forme cylindrique qui s'étend depuis la face avant 6 de la trémie 1 jusqu'à la paroi 10 située derrière le rotor éjecteur 21. Le rotor 21 est monté sur un arbre 22 centré sur l'axe longitudinal 9. Cet arbre 22 est guidé dans le moyeu 11 qui est solidaire du boîtier général 7 servant à la distribution de toute la puissance.

Le rotor 21 comporte, de façon classique, des pales 23 qui balaient l'intérieur de la volute 5. On remarque un jeu e entre le bord de la pale 23 et le côté interne de la face avant 6. Cette dimension e doit être maintenue la plus faible possible pour éviter la formation d'un amas de produits stagnants dans cette zone. On remarque, figure 5, le fond 24 de la trémie et, au-dessus du fond, un tapis transporteur 25 du type à barrettes 26 qui déversent les produits dans le cône central du rotor d'éjection 21.

La volute 5 comporte, du côté de la face avant 6 de la trémie, sur sa bordure, comme représenté dans l'encadré, un renfort circulaire constitué d'une cornière 27 dont une aile est adossée à la paroi 6. Cette cornière 27 et en particulier son aile tournée vers l'extérieur, est guidée dans une couronne 28 fixée par tout moyen approprié du genre boulons 29, sur la paroi avant 6. Cette couronne 28 comporte une rainure circulaire 30 dans laquelle est engagée l'aile 31 de la cornière 27. De préférence, la couronne circulaire 28 est réalisée en matériau plastique du genre téflon. Cette couronne peut être constituée d'une succession de tronçons en forme d'arc.

La volute 5 est également guidée sur le moyeu 11 solidaire du boîtier 7. La paroi 10 de cette volute comporte une bague centrale 32 montée sur l'extrémité du palier 11. La paroi 10 comporte encore des renforts 33 disposés en étoile entre la bague 32 et la paroi circulaire de la volute.

On retrouve, figure 8, l'espace e qui existe entre la bordure des pales 23 et le côté interne de la face avant 6 de la benne. Cet espace e est une côte qu'il faut maintenir de préférence la plus faible possible jour éviter comme signalé auparavant, l'agglutination de produits à la partie inférieure de la volute.

Pour obtenir une côte minimale, tout en conservant une section d'éjection importante au niveau de la sortie 17 de la volute 5, la goulotte 18 est rapprochée au maximum de la face avant 6 de la trémie. Cette goulotte 18, comme il a été montré précédemment sur les figures, est pivotante autour de l'axe 20 qui correspond à l'axe tangentiel de la sortie 17 de la volute 5. La section de la goulotte 18, tout comme celle de la sortie 17, au niveau de la couronne d'orientation 19 est une section carrée ; la largeur de ce carré est voisine de la largeur de la volute 5. Le produit éjecté par les pales 23 du rotor, parcourt sans obstacle la sortie 17 et s'introduit dans la goulotte 18 sans variation de section. Cette conservation de la section améliore considérablement le rendement du rotor d'éjection.

Compte-tenu de cette section carrée de la goulotte 18 et de la proximité de la paroi avant 6, le pivotement de la goulotte ne peut s'effectuer, comme montré figure 4, que dans des zones où l'embase 35 de la goulotte pourra passer au-delà de la paroi 6, comme montré figure 10. Le pivotement de cette goulotte 18 s'effectue par quart de tour.

L'embase 35 de la goulotte 18 est guidée à ses quatre coins dans une couronne circulaire 36 en forme d'arc de cercle qui s'étend sur environ 270° devant la face avant 6. L'embase 35 comporte des coins 37 arrondis au même diamètre que la couronne 36. Cette couronne 36 est solidaire de l'extrémité de la sortie 17 de la volute 5.

Le mouvement de pivotement de la goulotte 18 est obtenu au moyen d'un organe moteur 40 situé sur une platine 41 qui est fixée sur l'extrémité de la sortie 17 de la volute 5. Cette platine 41 supporte la couronne d'orientation 36 de la goulotte. Cet organe moteur 40 est positionné selon un axe 47 parallèle à l'axe 20 de pivotement de la goulotte ; il est disposé à l'opposé de la paroi 6 par rapport à cette dernière. Il comporte une roue dentée 42 qui entraîne une chaîne 43 du type à maillons, dont les extrémités 44 et 45 sont fixées sur la paroi avant 46 de la goulotte 18. La paroi 46 de la goulotte se situe du côté de l'éjection des produits et, comme représenté figures 7 et 8, en vis à vis de la face avant 6. Dans cette configuration représentée figures 7 et 8, les produits éjectés par les pales 23 sont recyclés et retournent dans la trémie 1 pour effectuer par exemple une opération de mélange.

Les brins 48 et 49 de la chaîne 43 sont maintenus tendus au moyen de galets 50 et 51 disposés entre le pignon 42 et la goulotte 18 solidaires de la platine 41. Ces galets 50 et 51 peuvent être guidés dans des rainures 52 et 53 respectivement, qui sont disposées parallèlement à la face avant 6 de la trémie, et, sous l'action d'un organe élastique en forme de ressort 54, maintenir de façon constante, une tension sur les brins de chaîne ; cette tension varie au fur et à mesure du pivotement de la goulotte 18 compte tenu de sa section carrée. Les galets 50 et 51 peuvent également être fixes sur la platine 41 pour guider les deux brins 48 et 49 de la chaîne ; la tension est alors obtenue au moyen de ressorts 54' réglables interposés entre les extrémités 44 et 45 de la chaîne et la paroi 46 de la goulotte. Ces ressorts 54' sont représentés de façon schématique en traits fins.

On peut aussi remarquer, figure 9, la présence d'un contre-couteau 55 disposé dans la tubulure de sortie 17, de façon à éviter les bourrages dans l'angle 56 formé par ladite sortie 17 et la paroi externe cylindrique de la volute 5.

On remarque, figures 1 à 4, la goulotte 18 munie d'un dispositif de réglage de son arc de courbure. Ce dispositif comprend un vérin 60 interposé entre l'embase 35 et l'extrémité arrière d'un étrier 61 articulé sur un bâti 62 solidaire lui aussi de l'embase 35, et articulé à son extrémité avant, sur l'extrémité 63 du déflecteur 64 constituant la goulotte 18. Ce déflecteur 64 est réalisé d'une façon monobloc à partir d'un flan de tôle convenablement prédécoupé et plié qui comporte une bande dorsale 65 et des flancs 66 constitués de plaques qui se chevauchent comme des écailles.

Les signes de référence insérés après les caractéristiques techniques mentionnées dans les revendications ont pour seul but de faciliter la compréhension de ces dernières et n'en limitent aucunement la portée.

## Revendications

1. Benne mélangeuse distributrice de produits destinés à l'élevage, du type comprenant un rotor d'éjection (21) positionné à l'avant de la benne sur un axe (9), lequel rotor (21) est disposé dans une volute (5) pivotante autour dudit axe (9), caractérisée en ce qu'elle comporte, solidaires de ladite volute (5), une goulotte d'éjection (19) disposée tangentiellement, et des moyens pour orienter cette goulotte de façon à réaliser une distribution du produit à l'extérieur de la benne, ou un recyclage dans la trémie (1) de ladite benne.

2. Benne mélangeuse distributrice selon la revendication 1, caractérisée en ce qu'elle comporte une volute (5) pivotante autour de l'axe (9) au moyen d'un guidage de sa paroi frontale (10) sur le moyeu (11) du rotor (21) et d'un guidage à sa périphérie, du côté de la paroi avant (6) de la trémie, dans une couronne circulaire (28) solidaire de ladite face avant (6).

3. Benne mélangeuse distributrice selon l'une quelconque des revendications 1 ou 2, caractérisée en ce qu'elle comporte des moyens permettant de faire pivoter la volute (5) autour de l'axe longitudinal (9), constitués d'une chaîne (14) à maillons, tendue entre deux points (15 et 16) disposés sur la paroi périphérique de ladite volute, et d'un organe moteur (13) interposé entre ladite chaîne (14) et ladite paroi périphérique de la volute (5), pour entraîner cette volute dans un sens ou dans l'autre et positionner la goulotte (18) à l'endroit voulu.

4. Benne mélangeuse distributrice selon l'une quelconque des revendications 1 à 3, caractérisée en ce qu'elle comporte une volute (5) et une goulotte (18) solidaire de la sortie tangentielle (17) de ladite volute dont les sections, au niveau des moyens d'orientation de la goulotte, sont identiques et de section carrée.

5. Benne mélangeuse distributrice selon la revendication 4, caractérisée en ce qu'elle comporte entre la sortie (17) de la volute (5) et la goulotte (18), une couronne d'orientation (36) constituée d'un arc circulaire, solidaire de ladite sortie (17), qui s'étend sur environ 270° devant la paroi avant (6) de la trémie, laquelle couronne réalise le guidage en rotation des coins (37) d'un cadre (35) servant d'embase à ladite goulotte (18).

6. Benne mélangeuse distributrice selon la revendication 5, caractérisée en ce qu'elle comporte une goulotte (18) soumise à des moyens d'orientation constitués d'une part, d'une chaîne (43) à maillons, disposée dans un plan parallèle au plan de la couronne d'orientation (36), et tendue entre deux points (44 et 45) situés sur la face avant (46) de ladite goulotte, c'est-à-dire la face située du côté de l'éjection des produits, et, d'autre part, d'un organe moteur (40) interposé entre ladite chaîne (41) et ladite goulotte (18).

7. Benne mélangeuse distributrice selon la revendication 6, caractérisée en ce que la chaîne (43) est guidée au moyen de galets (50, 51) et soumise à des moyens élastiques (54, 54') qui absorbent ses variations de tension lors de la rotation de la goulotte.

8. Benne mélangeuse distributrice selon l'une quelconque des revendications 1 à 7, caractérisée en ce que la goulotte comporte des moyens permettant de faire varier sa courbure, lesquels moyens sont constitués d'au moins un vérin (60) interposé entre l'embase (35) et un étrier (61) articulé sur un bâti (62) solidaire de ladite embase (35) et articulé, à son extrémité, sur la sortie aval de ladite goulotte (18).

9. Benne mélangeuse distributrice selon l'une quelconque des revendications 1 à 8, caractérisée en ce qu'elle comporte une goulotte (18) constituée d'un flan de tôle prédécoupé et préformé pour réaliser une bande dorsale (64) monolithique et des flancs (66) en forme d'écailles.

## Claims

1. Container for mixing and distributing products for raising animals, with an ejection rotor (21) positioned at the front of the container on an axle (9), said rotor (21) being arranged inside a shell (5) pivoting around said axle (9) characterised in that it comprises an ejection funnel (18), arranged tangentially and connected to said shell (5), as well as means for pivoting this funnel in order to perform the distribution of the product outside the container or recycling in the hopper (1) of said container.

2. Container for mixing and distributing products according to claim 1, characterised in that it comprises a shell (5) pivoting around the axle (9) using a guide in its front face (10) on the hub (11) of the rotor (21) and a guide in its periphery, on the front face side (6) of the hopper, in a circular ring (28) connected to said front face (6).

3. Container for mixing and distributing products according to claim 1 or 2, characterised in that it comprises means enabling to pivot the shell (5) around the longitudinal axis (9), made of a link chain (14), tightened between two points (15 and 16) arranged on the peripheral face of said shell, and a driving unit (13) interposed between said chain (14) and said peripheral face of the shell (5), in order to drive this shell into one direction or the other and to position the funnel (18) at the place desired.

4. Container for mixing and distributing products according to one of the claims 1 to 3, characterised in that it comprises a shell (5) and a funnel (18) connected to the tangential outlet (17) of said shell whose sections, as far as the orientation means of the funnel are concerned, are identical and square in section.

5. Container for mixing and distributing products according to claim 4, characterised in that it comprises between the outlet (17) of the shell (5) and the funnel (18), an orientation ring (36) made of a circular arch, connected to said outlet (17), stretching across approx. 270° in front of the front face (6) of the hopper, said ring guiding the rotation of the corners (37) of a frame (35) used as a seat for said funnel (18).

6. Container for mixing and distributing products according to claim 5, characterised in that it comprises a funnel (18) subjected to orientation means made, on the one hand, of a link chain (43) arranged on a plane parallel to that of the orientation ring (36) and tightened between two points (44 and 45) located on the front face (46) of said funnel, i.e. the face located on the ejection side of the products and, on the other hand, a driving unit (40) interposed between said chain (41) and said funnel (18).

7. Container for mixing and distributing products according to claim 6, characterised in that the chain (43) is guided using rollers (50, 51) and subjected to elastic means (54, 54') which absorb its variations in tension during the rotation of the funnel.

8. Container for mixing and distributing products according to one of the claims 1 to 7, characterised in that the funnel comprises means enabling to vary its curve, said means being made of at least one jack (60) interposed between the seat (35) and a yoke (61) articulated on a structure (62) connected to said seat (35) and articulated, at its end, on the downstream outlet of said funnel (18)

9. Container for mixing and distributing products according to one of the claims 1 to 8, characterised in that it comprises a funnel (18) made of a precut and preformed sheet blank in order to exhibit a monolithic back strip (64) and scale-like flanks (66).

## Patentansprüche

1. Behälter zum Mischen und Verteilen von Produkten für die Aufzucht von Tieren mit einem Auswerfrotor (21), der vor dem Behälter auf einer Achse (9) angeordnet ist, und der in einer Volute bzw. in einem Gehäuse (5) angeordnet ist, das um die Achse (9) schwenkbar ist,
**dadurch gekennzeichnet,**
daß fest mit der Volute (5) eine Auswerfrutsche (18) vorgesehen ist, die tangential angeordnet ist, und daß Mittel vorgesehen sind, um die Rutsche derart auszurichten, daß eine Verteilung des Produkts außerhalb des Behälters erfolgt oder ein Wiedereinfüllen in den Bunker (1) des Behälters.

2. Behälter nach Anspruch 1,
**dadurch gekennzeichnet,**
daß eine Volute (5) vorgesehen ist, die um die Achse (9) verschwenkt, und zwar mit Hilfe einer Führung ihrer Vorderwand (10) auf der Nabe (11) des Rotors (21) und einer Führung an ihrem Umfang an der Seite der Vorderwand (6) des Bunkers (1) in einem Kreisring (28), der fest mit der Vorderwand (6) verbunden ist.

3. Behälter nach Anspruch 1 oder 2,
**dadurch gekennzeichnet**,
daß Mittel vorgesehen sind, die ein Verschwenken der Volute (5) um die Längsachse (9) ermöglichen und die aus einer Gliederkette (14) bestehen, die zwischen zwei Punkten (15 und 16) gespannt ist, die an der Umfangswand der Volute angeordnet sind, und mit einem Motor (13), der zwischen der Kette (14) und der Umfangswand der Volute (5) angeordnet ist, um die Volute in der einen oder anderen Richtung mitzunehmen und um die Rutsche (18) an der gewünschten Stelle zu positionieren.

4. Behälter nach einem der Ansprüche 1 - 3,
**dadurch gekennzeichnet,**
daß eine Volute (5) und eine Rutsche (18) vorgesehen sind, die mit dem tangentiellen Ausgang (17) der Volute fest verbunden ist, und deren Querschnitte in Bezug auf die Ausrichtmittel der Rutsche identisch und quadratisch bzw. viereckig sind.

5. Behalter nach Anspruch 4,
**dadurch gekennzeichnet,**
daß zwischen dem Ausgang (17) der Volute (5) und der Rutsche (18) ein zur Ausrichtung dienender Kreisring (36) vorgesehen ist, der aus einem kreisförmigen Bogen besteht, der fest mit dem Ausgang (17) verbunden ist, der sich über einen Winkel von etwa 270° vor der Vorderwand (6) des Bunkers erstreckt, wobei der Kreisring die Drehführung der Ecken (37) eines Rahmens (35) ausbildet, der als Basis oder Fuß für die Rutsche (18) dient.

6. Behälter nach Anspruch 5,
**dadurch gekennzeichnet,**
daß eine Rutsche (18) vorgesehen ist, die mit Ausrichtmitteln zusammenarbeitet, die einerseits aus einer Gliederkette (43) gebildet sind, die in einer Ebene parallel zur Ebene des zur Ausrichtung dienenden Kreisringes (36) angeordnet ist, und die zwischen zwei Punkten (44 und 45) gespannt ist, die an der Vorderseite (46) der Rutsche vorgesehen sind, das heißt an derjenigen Seite, die zur Seite des Auswerfens der Produkte weist, und andererseits bestehend aus einem Motor (40), der zwischen der Kette (41) und der Rutsche (18) angeordnet ist.

7. Behälter nach Anspruch 6,
**dadurch gekennzeichnet,**
daß die Kette (43) mit Hilfe von Rollen (50, 51) geführt ist und elastischen Mitteln (54, 54') unterworfen ist, die Spannungsschwankungen beim Drehen der Rutsche absorbieren.

8. Behälter nach einem der Ansprüche 1 - 7,
**dadurch gekennzeichnet,**
daß die Rutsche Mittel aufweist, die es ermöglichen, ihre Krümmung zu ändern, und die aus wenigstens einer Kolben-Zylinder-Einheit (60) bestehen, die zwischen der Basis (35) und einem Bügel (61) angeordnet ist, der an einen Rahmen (62) angelenkt ist, der fest mit der Basis (35) verbunden ist, und der an seinem Ende an dem stromab gelegenen Ausgang der Rutsche (18) angelenkt ist.

9. Behälter nach einem der Ansprüche 1 - 8,
**dadurch gekennzeichnet,**
daß eine Rutsche vorgesehen ist, die aus einem vorgeschnittenen und vorgeformten Blechzuschnitt besteht, um ein dorsales, monolithisches Band (64) auszubilden sowie schuppenförmige Flanken (66).
